# FASCICULE DE BREVET EUROPEEN

(11) **EP 0 700 177 B1**
(45) Date de publication et mention de la délivrance du brevet: **25.02.1998**
(21) Numéro de dépôt: 95401946.9
(22) Date de dépôt: 24.08.1995
(51) Int. Cl.: H04B 10/17, H04Q 3/52

(54) **Matrice de commutation optique**
Optische Schaltmatrix
Optical switching matrix

(30) Priorité: 29.08.1994 FR 9410367
(43) Date de publication de la demande: 06.03.1996
(73) Titulaire: ALCATEL ALSTHOM COMPAGNIE GENERALE D'ELECTRICITE, 75008 Paris (FR)
(72) Inventeur: Sotom, Michel, F-75015 Paris (FR)
(74) Mandataire: Fournier, Michel

(56) Documents cités:
- EP-A- 0 474 426
- EP-A- 0 503 849
- PHOTONIC SWITCHING II, PROCEEDINGS OF THE INTERNATIONAL TOPICAL MEETING, vol. 29, 12 Avril 1990, Kobe, JP, pp 122-125, XP 000333141; Y.SATO ET AL.: 'An Erbium-Doped Fiber Active Switch Controled by Coded Pump Light'
- PATENT ABSTRACTS OF JAPAN vol. 18 no. 447 (E-1594), 19 Août 1994 & JP-A-06 140 702

## Description

La présente invention concerne la commutation spatiale de signaux optiques, notamment dans le cadre d'un réseau de télécommunications à fibres optiques.

Les noeuds de tels réseaux peuvent inclure des dispositifs de commutation spatiale constitués de répartiteurs passifs et de sélecteurs actifs. Chaque répartiteur passif du type 1 vers n ne fournit sur une des ses sorties que la fraction 1/n de la puissance du signal qu'il reçoit en entrée. De plus chaque sélecteur actif introduit des pertes. C'est pourquoi un tel dispositif comporte classiquement des amplificateurs à fibres dopées. Un tel amplificateur comporte une fibre optique dopée guidant des signaux optiques à transmettre. Il comporte aussi des moyens de pompage injectant une lumière de pompe dans cette fibre de manière à amplifier ces signaux et à compenser ainsi les pertes de puissance décrites ci-dessus. La présente invention concerne de manière plus générale le cas où l'amplification est réalisée dans un élément qui n'est pas nécessairement une fibre optique mais qui est pompé optiquement.

Dans les matrices de commutation utilisant de tels sélecteurs un autre problème important est celui de la diaphonie des sélecteurs actifs. Un tel sélecteur peut par exemple orienter des signaux en raccordant un guide optique qui, en ce qui concerne ce sélecteur et ces signaux, sera appelé ci-après "guide commun", à un guide individuel qui est sélectionné parmi une pluralité de guides individuels susceptibles d'être raccordés à ce guide commun. Il transmet des signaux des guides individuels vers le guide commun ou du guide commun vers les guides individuels. Sa diaphonie peut par exemple être exprimée de manière simplifiée par un coefficient r tel que, si une puissance WA est reçue sur le guide commun et transmise par le guide sélectionné, une puissance indésirable r.WA est transmise par chacun des autres guides individuels, ou réciproquement, si une puissance WB est reçue sur un guide individuel non sélectionné, une puissance indésirable r.WB est transmise par le guide commun.

Une première matrice de commutation connue comporte des dispositions pour obtenir un coefficient de diaphonie plus petit.

Elle est décrite dans un article : PHOTONIC SWITCHING II, PROCEEDINGS OF THE INTERNATIONAL TOPICAL MEETING, vol. 29, 12 Avril 1990 - 14 Avril 1990 KOBE, JAPAN, pages 122-125, XP 000333141 Y.SATO ET AL "An Erbium-Doped Fiber Active Switch Controled by Coded Pump Light". Elle comporte plusieurs amplificateurs à fibres dopées distribués sur divers trajets guidés susceptibles d'être suivis par les signaux à commuter. Plusieurs guides d'alimentation à commuter amènent respectivement une onde de pompe à ces amplificateurs pour les alimenter c'est-à-dire pour assurer le pompage optique de leurs fibres dopées.

Un décodeur optique reçoit cette onde en amont pour la transmettre à ces guides. En réponse à un codage de cette onde il alimente à chaque instant sélectivement ceux des amplificateurs qui sont situés sur les trajets qui sont sélectionnés pour être suivis à cet instant. Il en résulte que les signaux qui suivent ces trajets sélectionnés sont amplifiés alors que les autres signaux sont absorbés par les amplificateurs non alimentés.

Cette première matrice connue est complexe.

La présente invention a notamment pour but de réaliser de manière simple une matrice de commutation optique présentant un faible coefficient de diaphonie.

Dans ce but une matrice selon cette invention comporte :
- une pluralité de guides d'entrée,
- une pluralité de guides de sortie,
- une pluralité de sélecteurs, chaque dit sélecteur ayant au moins trois ports et étant commandé pour être placé dans un état sélectionné parmi une pluralité d'états possibles de ce sélecteur, chaque dit état possible étant associé à au moins une paire de ports constituée par deux dits ports, ledit état sélectionné raccordant optiquement mutuellement les deux ports de chaque dite paire de ports associée à cet état sélectionné,
- une pluralité de guides intermédiaires formant, avec lesdits sélecteurs et pour des signaux optiques à commuter, une pluralité de trajets possibles reliant chacun un dit guide d'entrée à un dit guide de sortie à travers au moins un dit guide intermédiaire et au moins une dite paire de ports d'un sélecteur,
- des amplificateurs à pompage optique disposés chacun en série sur un dit guide intermédiaire pour amplifier lesdits signaux optiques transmis par ce guide, au moins un dit amplificateur étant disposé sur chaque dit trajet possible,
- des pompes injectant dans lesdits guides d'entrée, intermédiaires et/ou de sortie des lumières de pompe pour pomper lesdits amplificateurs à travers ces sélecteurs, chaque dit sélecteur traversé par une dite lumière de pompe d'une dite pompe constituant un sélecteur orientant la lumière de cette pompe et cette pompe constituant une pompe à lumière orientée par ce sélecteur lorsqu'aucun dit amplificateur n'est interposé entre cette pompe et ce sélecteur,
cette matrice étant caractérisé par le fait qu'au moins un dit sélecteur orientant la lumière d'une dite pompe constitue un sélecteur à entrée de pompe unique, lesdits ports de ce sélecteur constituant un port commun et une pluralité de ports individuels, chaque dit état possible de ce sélecteur étant associé à au moins un dit port individuel de ce sélecteur, ledit état sélectionné de ce sélecteur raccordant ce port commun à chaque dit port individuel associé à cet état sélectionné, chaque dite pompe à lumière orientée par ce sélecteur étant raccordée à ce sélecteur par l'intermédiaire de ce port commun.

L'intérêt de la présente invention tient au fait qu'une fraction utile de chaque signal optique bénéficie d'une amplification privilégiée par rapport à des fractions parasites de ce signal ou d'autres signaux optiques. Cette fraction de signal utile est celle qui transite par le port individuel sélectionné. Ce port individuel est raccordé à un guide constituant pour ce sélecteur un guide individuel et comportant un amplificateur. Ce dernier offre à cette fraction de signal un gain d'amplification qui est rendu important par la présence d'une fraction utile importante de la lumière de pompe. Les fractions parasites des signaux optiques sont celles qui sont guidées par les autres guides individuels raccordés aux autres ports individuels du sélecteur. Elles n'y bénéficient que d'un gain d'amplification qui est réduit par le fait que seule des petites fractions parasites de la lumière de pompe sont injectées dans ces autres guides.

On peut remarquer que la matrice selon la présente invention possède une disposition commune avec une deuxième matrice connue qui est décrite dans le document de brevet EP-A-0 503 849 (ATT). Cette disposition commune est que, dans certains sélecteurs situés entre des pompes et des amplificateurs à pompage optique, les ondes de pompes suivent les mêmes trajets sélectionnés que les signaux à orienter. Cependant, dans cette deuxième matrice connue, chaque tel sélecteur présente plusieurs ports qui sont disposés pour recevoir de la lumière de pompe. Ces ports sont raccordés respectivement de manière bien connue à plusieurs pompes de sorte que cette disposition commune apparaît dans cette matrice n'avoir ni pour but ni pour effet de diminuer le coefficient de diaphonie.

A l'aide des figures schématiques ci-jointes, on va décrire ci-après comment la présente invention peut être mise en oeuvre. Lorsqu'un même élément est représenté sur plusieurs figures il y est désigné par le même signe de référence.

Ces figures représentent des matrices de commutation optique.

La figure 1 représente une matrice connue avec amplification.

La figure 2 représente une matrice mettant cette invention en oeuvre.

De manière d'abord générale et en considérant un seul sélecteur une matrice selon cette invention comporte les éléments suivants connus en eux-mêmes :
- Des guides pour guider des signaux optiques. Certains de ces guides D sont dopés pour constituer des amplificateurs. Chaque tel guide dopé amplifie un signal s'il guide en même temps ce signal et la lumière d'une pompe P. Ces guides constituent :
   . un guide commun Bk,
   . et une pluralité de guides individuels, F1k...Fik...Fmk.
- Un sélecteur Ck possède un port commun et une pluralité de ports individuels raccordés respectivement à ce guide commun et à cette pluralité de guides individuels. Il reçoit un signal de commande et raccorde, par l'intermédiaire de ces ports, le guide commun Bk à au moins un guide individuel Fik sélectionné par ce signal de commande. Ce raccordement est tel que le sélecteur transmet de manière sélective les signaux optiques entre le guide commun et le guide individuel sélectionné.
- Et une pompe P pour fournir la lumière de pompe et pour assurer son injection dans les guides dopés D.

Les guides individuels sont dopés. Leur dopage est réalisé par exemple sur des parties seulement de leurs longueurs par intégration d'un guide préalablement dopé D dans chacun d'eux en série avec un guide non dopé. De tels guides composites sont représentés en F1k, D...Fik, D...jusqu'à Fmk, D. La pompe P injecte la lumière de pompe dans le guide commun Bk à l'aide d'un coupleur d'injection Q en direction du sélecteur Ck. Ce dernier est apte à transmettre la lumière de pompe de ce guide commun vers le guide individuel sélectionné tel que Fik, D, ceci de la même manière sélective que pour les signaux optiques.

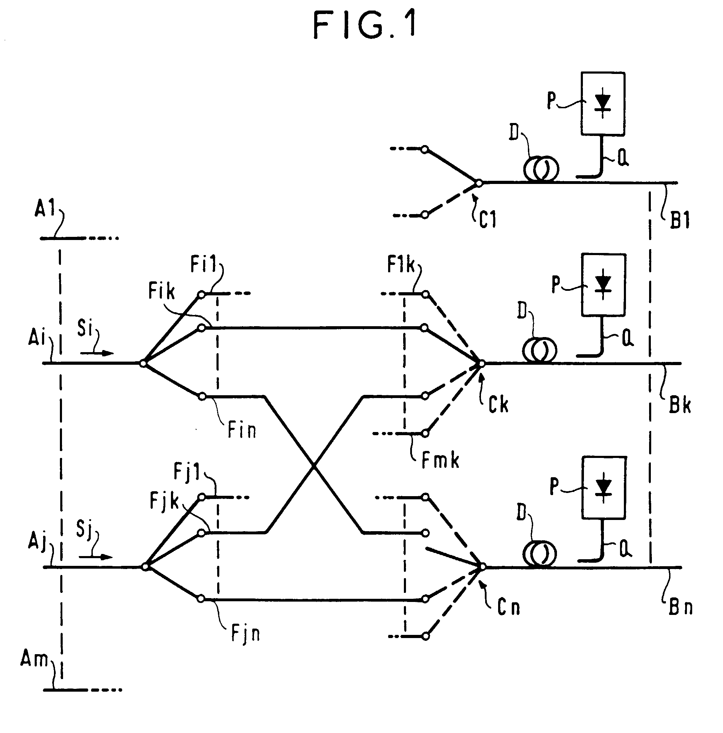

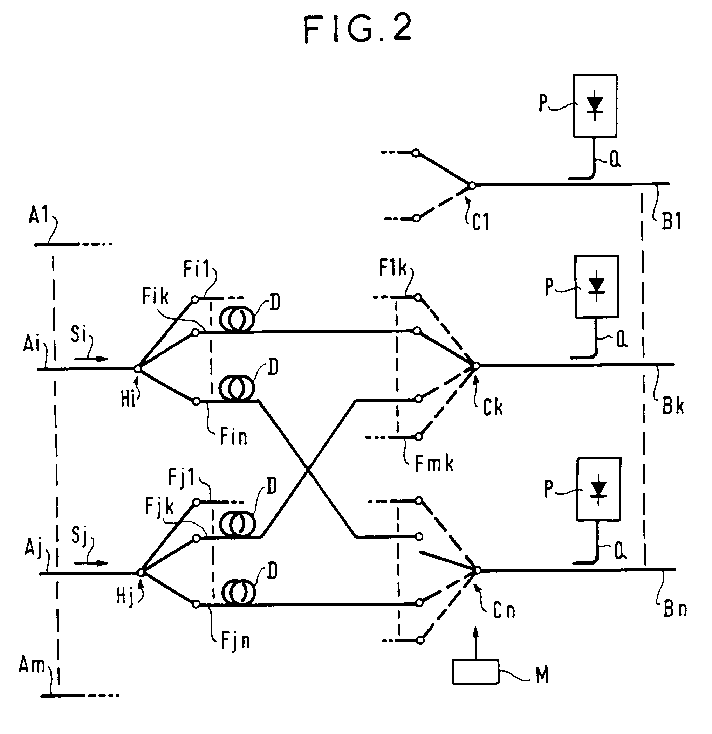

Les figures 1 et 2 représentent chacune, à titre d'exemple non limitatif, une matrice de commutation plus complexe du type m x n. Cette matrice comporte m répartiteurs passifs 1 vers n tels que Hi et Hj en entrée, et n sélecteurs actifs m vers 1 C₁...Cₙ en sortie. Les nombres m et n sont des entiers positifs. Pour simplifier le dessin deux répartiteurs et deux sélecteurs seulement ont été représentés d'une manière relativement complète. Les sélecteurs sont commandés par un organe de commande M.

Les composants de chacune de ces matrices sont identiques aux composants de mêmes noms de l'autre. Les répartiteurs passifs comportent en entrée chacun un guide d'entrée constituant pour ce répartiteur un guide commun, respectivement A1...Ai...Aj....Am, les lettres de référence de ce guide commun désignant aussi ce répartiteur. Chaque répartiteur tel que Ai comporte en sortie n guides individuels tels que tels que Fi1...Fik...Fin.

Les sélecteurs actifs C1...Ck...Cn comportent en sortie chacun un guide de sortie constituant pour ce sélecteur un guide commun, respectivement B1...Bk...Bn.

Chaque sélecteur tel que Ck comporte en entrée m guides individuels F1k...Fik...Fjk...Fmk.

Les guides individuels sont au nombre total de m.n et sont chacun commun à un répartiteur et à un sélecteur. Ils constituent les guides intermédiaires précédemment mentionnés.

Des amplificateurs sont alimentés par des pompes désignées de manière générale par la lettre P, et munies chacune d'un coupleur d'injection directif tel que Q. Chaque amplificateur est constitué par un guide dopé désigné de manière générale par la lettre D. Des pompes P en nombre n sont placées respectivement sur les n guides de sortie B1...Bk..Bn. Les coupleurs d'injection dirigent les lumières de pompe vers les sélecteurs. Des signaux d'entrée tels que Si et Sj en nombre m sont reçus avec des puissances telles que Pi et Pj sur les guides d'entrée tels que Ai et Aj, respectivement. Le sélecteur Ck est commandé pour qu'une fraction 1/n de la puissance du signal Si soit orientée vers le guide de sortie Bk.

La diminution de diaphonie due à la présente invention va maintenant être calculée approximativement avec l'aide d'hypothèses simplificatrices.

Chaque amplificateur est prévu pour amplifier avec un gain de valeur G les signaux qu'il guide. Cette valeur de gain est obtenue à la condition que cet amplificateur reçoive, en même temps que les signaux à amplifier, la totalité de la puissance de la lumière d'une pompe P. S'il reçoit seulement une fraction y telle 0,1 ou 0,01 de cette puissance il amplifie ces signaux avec un gain diminué valant environ G.y.

Dans le guide Bk la puissance de sortie du signal Si est alors à peu près Pk= Pi.G/n

La diaphonie du sélecteur Ck est exprimée par un coefficient r qui est le même pour les signaux à transmettre et pour la lumière de pompe. La puissance des signaux d'entrée tels que Sj autres que Si est une puissance parasite d'entrée et présente une valeur totale PTE.

Dans la matrice connue de la figure 1, n guides dopés D sont respectivement raccordés aux n guides de sortie B1...Bk...Bn entre les pompes et les sélecteurs.

Dans la matrice de la figure 2, et conformément à la présente invention, aucun guide dopé n'est raccordé aux guides de sortie et m.n guides dopés D sont intégrés respectivement aux m.n guides individuels.

Dans la matrice connue les signaux indésirables injectés par diaphonie dans le guide de sortie Bk bénéficient tous d'un gain d'amplification G et ils présentent dans le guide Bk une puissance parasite totale de sortie valant environ PTS1=PTE.G.r/n.

Dans la matrice de la figure 2 ces signaux parasites n'ont bénéficié que d'un gain d'amplification réduit G.r et la puissance parasite totale de sortie vaut environ PTS2=PTE.G.r²/n. La présente invention a donc permis de diminuer cette puissance parasite, c'est-à-dire la diaphonie, par un facteur de réduction r tel que 1/10 ou 1/100.

Il doit être compris que, sans sortir du cadre de la présente invention, les répartiteurs passifs tels Hi et Hj pourraient être remplaçés par des sélecteurs actifs et que les pompes P pourraient alors être placées sur les guides d'entrée A₁...Aₘ.

## Revendications

1. Matrice de commutation optique, cette matrice comportant
- une pluralité de guides d'entrée (A1....An)
- une pluralité de guides de sortie (B1...Bn)
- une pluralité de sélecteurs (C1...Cn), chaque dit sélecteur (Ck) ayant au moins trois ports (Bk, F1k, ...,Fmk) et étant commandé pour être placé dans un état sélectionné parmi une pluralité d'états possibles de ce sélecteur, chaque dit état possible étant associé à au moins une paire de ports constituée par deux dits ports, ledit état sélectionné raccordant optiquement mutuellement les deux ports de chaque dite paire de ports associée à cet état sélectionné,
- une pluralité de guides intermédiaires (Fi1...Fjn) formant, avec lesdits sélecteurs et pour des signaux optiques à commuter, une pluralité de trajets possibles reliant chacun un dit guide d'entrée à un dit guide de sortie à travers au moins un dit guide intermédiaire et au moins une dite paire de ports d'un sélecteur,
- des amplificateurs (D) à pompage optique disposés chacun en série sur un dit guide intermédiaire pour amplifier lesdits signaux optiques transmis par ce guide, au moins un dit amplificateur étant disposé sur chaque dit trajet possible,
- des pompes (P) injectant dans lesdits guides d'entrée, intermédiaires et/ou de sortie des lumières de pompe pour pomper lesdits amplificateurs à travers ces sélecteurs, chaque dit sélecteur traversé par une dite lumière de pompe d'une dite pompe constituant un sélecteur orientant la lumière de cette pompe et cette pompe constituant une pompe à lumière orientée par ce sélecteur lorsqu'aucun dit amplificateur n'est interposé entre cette pompe et ce sélecteur,
cette matrice étant caractérisée par le fait qu'au moins un dit sélecteur (Ck) orientant la lumière d'une dite pompe constitue un sélecteur à entrée de pompe unique, lesdits ports de ce sélecteur constituant un port commun (Bk) et une pluralité de ports individuels (F1k...Fmk), chaque dit état possible de ce sélecteur étant associé à au moins un dit port individuel de ce sélecteur,
ledit état sélectionné de ce sélecteur raccordant ce port commun à chaque dit port individuel associé à cet état sélectionné, chaque dite pompe (P) à lumière orientée par ce sélecteur étant raccordée à ce sélecteur par l'intermédiaire de ce port commun.

2. Matrice selon la revendication 1, des configurations possibles de ladite matrice étant constituées chacune par un ensemble de dits états possibles susceptibles d'être sélectionnés simultanément, chaque dite configuration possible définissant pour chaque dit guide d'entrée (Ai) un trajet raccordant ce guide d'entrée à un dit guide de sortie (Bk), et définissant aussi pour chaque dit guide de sortie (Bk) un trajet raccordant ce guide de sortie à un dit guide d'entrée (Ai).

3. Matrice selon la revendication 1 caractérisée par le fait que chaque dit sélecteur (Ck) orientant la lumière d'une dite pompe (P) constitue un dit sélecteur à entrée de pompe unique.

4. Matrice selon la revendication 1, lesdites pompes (P) injectant lesdites lumières de pompe dans lesdits guides d'entrée (Ai) et/ou de sortie (Bk).

5. Matrice selon la revendication 1, cette matrice comportant des moyens de commande (M) pour commander lesdits sélecteurs (C1...Cn) sans commander lesdites pompes (P).

## Patentansprüche

1. Optische Schaltmatrix, umfassend
* eine Vielzahl von Eingangsleitern (A1 ..... An)
* eine Vielzahl von Ausgangsleitern (B1 ..... Bn)
* eine Vielzahl von Wählern (C1 ..... Cn), wobei jeder besagte Wähler (Ck) mindestens drei Öffnungen (Bk, F1k, ... , Fmk) aufweist und gesteuert wird, um in einen unter einer Vielzahl von möglichen Schaltzuständen dieses Wählers ausgewählten Schaltzustand gebracht zu werden, wobei jeder besagte mögliche Schaltzustand mindestens einem aus zwei besagten Öffnungen gebildeten Öffnungspaar zugeordnet ist, wobei der besagte ausgewählte Schaltzustand die beiden Öffnungen jedes diesem ausgewählten Schaltzustand zugeordneten Öffnungspaares gegenseitig optisch verbindet,
* eine Vielzahl von Zwischenleitern (Fi1 ... Fjn), welche mit den besagten Wählern und für zu schaltende optische Signale eine Vielzahl von möglichen Strecken bilden, die jede einen besagten Eingangsleiter mit einem besagten Ausgangsleiter über mindestens einen besagten Zwischen leiter und mindestens ein besagtes Öffnungspaar eines Wählers verbinden,
* optisch gepumpte Verstärker (D), von denen jeder in Serie auf einem besagten Zwischenleiter angeordnet ist, um die besagten, von diesem Leiter übertragenen optischen Signale zu verstärken, wobei mindestens ein besagter Verstärker auf jeder besagten möglichen Strecke angeordnet ist,
* Pumpvorrichtungen (P), welche in die besagten Eingangs-, Zwischen-, und/ oder Ausgangsleiter Pumplicht einstrahlen, um die besagten Verstärker über diese Wähler zu pumpen, wobei jeder besagte, von einem besagten Pumplicht einer besagten Pumpvorrichtung durchquerte Wähler einen Wähler darstellt, welcher das Licht dieser Pumpvorrichtung orientiert und wobei diese Pumpvorrichtung eine Pumpvorrichtung darstellt, deren Licht von diesem Wähler orientiert wird, wenn kein besagter Verstärker zwischen dieser Pumpvorrichtung und diesem Wähler eingeschaltet ist,
wobei diese Matrix dadurch gekennzeichnet ist, daß mindestens ein besagter Wähler (Ck), welcher das Licht einer besagten Pumpvorrichtung orientiert, einen Wähler mit einem einzigen Pumpeingang darstellt, wobei die besagten Öffnungen dieses Wählers eine gemeinsame Öffnung (Bk) und eine Vielzahl von Einzelöffnungen (F1k... Fmk) darstellen, wobei jeder besagte mögliche Schaltzustand dieses Wählers mindestens einer besagten Einzelöffnung dieses Wählers zugeordnet ist, wobei der besagte ausgewählte Schaltzustand dieses Wählers diese gemeinsame Öffnung mit jeder besagten, diesem ausgewählten Schaltzustand zugeordneten Einzelöffnung verbindet, wobei jede besagte Pumpvorrichtung (P), deren Licht von diesem Wähler orientiert wird, über diese gemeinsame Öffnung mit diesem Wähler verbunden wird.

2. Matrix gemäß Anspruch 1, wobei mögliche Ausführungen der besagten Matrix jeweils aus einer Menge besagter möglicher Schaltzustände bestehen, welche geeignet sind, gleichzeitig ausgewählt zu werden, wobei jede besagte mögliche Ausführung für jeden besagten Eingangsleiter (Ai) eine Strecke definiert, die diesen Eingangsleiter mit einem besagten Ausgangsleiter (Bk) verbindet, und somit auch für jeden besagten Ausgangsleiter (Bk) eine Strecke definiert, die diesen Ausgangsleiter mit einem besagten Eingangsleiter (Ai) verbindet.

3. Matrix gemäß Anspruch 1, dadurch gekennzeichnet, daß jeder besagte Wähler (Ck), welcher das Licht einer besagten Pumpvorrichtung (P) orientiert, einen besagten Wähler mit einem einzigen Pumpeingang darstellt.

4. Matrix gemäß Anspruch 1, wobei die besagten Pumpvorrichtungen (P) das besagte Pumplicht in die besagten Eingangsleiter (Ai) und/oder Ausgangsleiter (Bk) einstrahlen.

5. Matrix gemäß Anspruch 1, wobei diese Matrix Steuermittel (M) umfaßt, um die besagten Wähler (C1 ... Cn) zu steuern, ohne die besagten Pumpvorrichtungen (P) zu steuern.

## Claims

1. Optical switching matrix including:
- a plurality of input waveguides (A1...An),
- a plurality of output waveguides (B1...Bn),
- a plurality of selectors (C1...Cn) each selector (Ck) having at least three ports (Bk, F1k ..., Fmk) and being commanded to assume a selected one of a plurality of possible states, each possible state being associated with at least one pair of said ports, said selected state optically interconnecting the two ports of each of said pairs of ports associated with said selected state,
- a plurality of intermediate waveguides (Fi1...Fjn) forming with said selectors for optical signals to be switched a plurality of possible paths each connecting one input waveguide to one output waveguide via at least one intermediate waveguide and at least one pair of ports of a selector,
- optically pumped amplifiers (D) each in series with an intermediate waveguide to amplify said optical signals transmitted by said waveguide, there being at least one such amplifier on each of said possible paths,
- pumps (P) injecting pump light into said input, intermediate and/or output waveguides to pump said amplifiers via said selectors of the same selected paths as said optical signals, each selector conveying pump light from a pump constituting a selector switching the light from said pump and said pump constituting a light pump switched by said selector if there is no amplifier between said pump and said selector,
said matrix being characterised in that at least one selector (Ck) switching light from a pump constitutes a single pump input selector, said ports of this selector constituting a common port (Bk) and a plurality of individual ports (F1k...Fmk), each of said possible states of said selector being associated with at least one of said individual ports of said selector,
said selected state of said selector connecting said common port to each of said individual ports associated with said selected state, each of said light pumps (P) switched by said selector being connected to said selector by said common port.

2. Matrix according to claim 1 wherein possible configurations of said matrix each comprise a set of said possible states that can be selected simultaneously and each of said possible configurations defines for each of said input waveguides (Ai) a path connecting that input waveguide to one of said output waveguides (Bk) and defining also for each of said output waveguides (Bk) a path connecting that output waveguide to one of said input waveguides (Ai).

3. Matrix according to claim 1 characterised in that each of said selectors (Ck) switching the light from one of said pumps (P) constitutes one of said single pump input selectors.

4. Matrix according to claim 1 wherein said pumps (P) inject said pump light into said input waveguides (Ai) and/or said output waveguides (Bk).

5. Matrix according to claim 1 including control means (M) for commanding said selectors (C1...Cn) without commanding said pumps (P).
